# EUROPEAN PATENT SPECIFICATION

(11) **EP 1 608 087 B1**
(45) Date of publication and mention of the grant of the patent: **26.12.2012**
(21) Application number: 05104075.6
(22) Date of filing: 17.05.2005
(51) Int. Cl.: H04B 7/26

(54) **Wireless communication unit and method for acquiring synchronisation therein**
Drahtlose Kommunikationsvorrichtung und Verfahren zur Erreichung von Synchronisierung in der Vorrichtung
Appareil de communication sans fil et procédé pour l'acquisition de synchronisation dans l'appareil

(30) Priority: 18.05.2004 GB 0411027
(43) Date of publication of application: 21.12.2005
(73) Proprietor: Motorola Solutions Israel Limited, 70199 Airport City (IL)
(72) Inventor: Ofir, Gabi, 67899, Tel-Aviv (IL); Dory, Dan, 67899, Tel Aviv (IL); Suplin, Anatoliy, 67899, Tel Aviv (IL)
(74) Representative: Treleven, Colin

(56) References cited:
- WO-A-02/37714
- US-A1- 2003 147 367

## Description

### Field of the Invention

This invention relates to a wireless communication and a method for acquiring synchronisation therein. In particular, the invention is applicable to, but is not limited to, acquiring synchronisation between mobile wireless communication units operating in an unsynchronised wireless communication system, such as a TETRA direct mode communication system.

### Background of the Invention

Wireless communication systems, for example cellular telephony or private mobile radio (PMR) communication systems, typically provide for radio telecommunication links to be arranged between a number of MSs. In wireless communication systems, there are typically two methods of communicating between mobile wireless communication units, often referred to as 'mobile stations' ('MSs'). A first method is a direct communication between two MSs, as provided for in 'direct-mode' communication in a PMR communication system. A second method uses one or more intermediary station to forward a received communication from a first MS to a second MS, as provided in 'trunked mode' communication or repeater-based DM communication in a PMR communication system or in a mobile cellular telephone communication system.

In a wireless private mobile radio (PMR) communication system, such as the TErrestrial Trunked RAdio (TETRA) standard defined by the European Telecommunications Standards Institute (ETSI), it is known that a MS may operate outside a dedicated network coverage area by communicating in a direct communication link with at least one other MS. Such a communication mode is generally referred to as Direct Mode Operation (DMO). This term is in contrast to Trunked Mode operation (TMO) that enables the MS to work within network coverage, with communications controlled and facilitated by a switching and management infrastructure (SwMI). Hence, when a MS operates in DMO, there is no system controller and therefore no centralised timing synchronisation, to synchronise the timing of communications between MSs. This type of system is often referred to as an unsynchronised wireless communication system.

In order to understand the context of the present invention, let us first consider the TETRA DMO timing structure as it is currently defined. The TETRA timing structure uses a time division multiple access (TDMA) protocol. The timing structure is arranged, for each frequency channel, in multi-frames, with each multi-frame comprising eighteen (rolling) time frames. Each time frame is divided into four time slots.

The TETRA DMO standard defines five distinct transmission frames that are able to occur on a TETRA channel at any point in time. A first frame type is a free frame (Type 1), i.e. a frame where there is no data or activity related to the TETRA protocol. For instance, this frame type may occur when the communication channel is free or when the communication channel is reserved and the frames carrying signalling data are sent only in frames 6, 12, and 18.

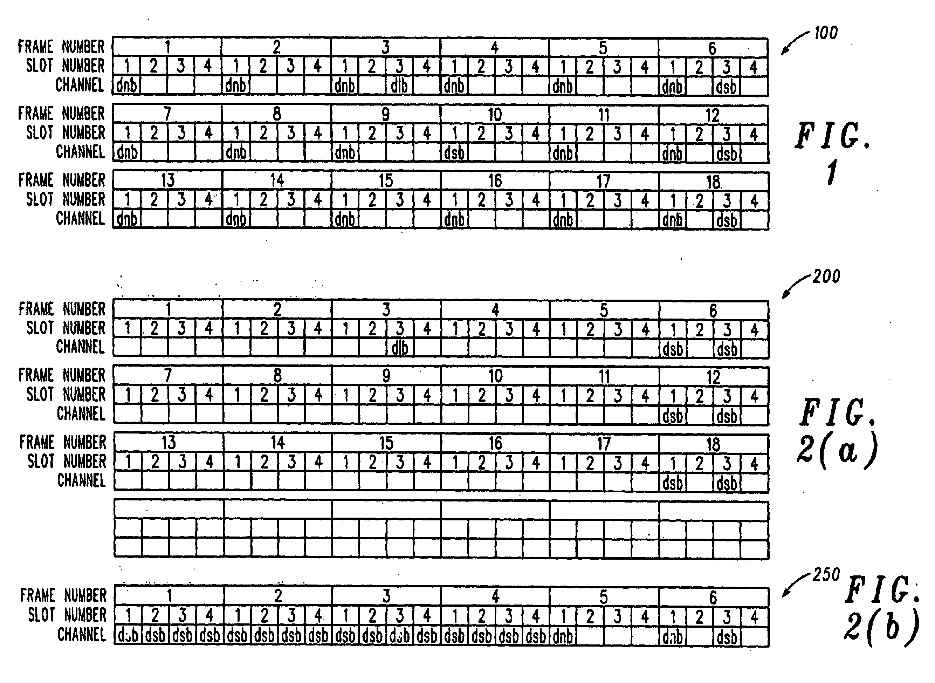

There are several types of TETRA DMO frame which may be configured to carry traffic or signalling data, as illustrated in FIGS. 1 to 2(b). These frame types include: (i) a 'Traffic frame' (Type-2), offering purely traffic communication; (ii) a synch, and traffic frame (TETRA DMO Type-3) which offers a DMO communication unit the opportunity to perform late entry catch up and/or perform channel perception for those DMO communication units in an 'Idle Busy' mode; and a 'Synchronisation' frame which offers a called party DMO communication unit the opportunity to receive signalling information and/or to perform symbol time recovery (STR) and frequency correction (FC). Examples of Frame Types 2 to 4 are given in FIGS. 1 to 2(b).

Referring now to FIG. 1, a TETRA DMO timing sequence 100 is shown in tabular form which includes Type-2 and Type-3 frames. The Type-2 frames are those having only traffic slots indicated in FIG. 1 by the symbol 'dnb', e.g. slot '1' of frame '1' in FIG. 1. The Type-3 frame types are those having both a traffic slot, indicated by the symbol 'dnb' and also a synchronisation slot, indicated by the symbol 'dsb'. Examples of such a frame in FIG. 1 are frame '6'; frame '12'; and frame 18.

A fourth transmission frame type is illustrated in a further timing sequence 200 shown in tabular form in FIG. 2a. Here, examples of a Synchronisation ('Sync. + Sync.') Frame (Type-4) are each of frames '6', '12' and '18'. Each of slots '1' and '3' of these frames is a synch. slot as indicated by the symbol 'dsb'. Synchronisation frames offer a called party DMO communication unit the opportunity to receive signalling information and/or to perform symbol time recovery (STR) and frequency correction (FC).

A fifth transmission frame type is illustrated in a timing sequence 250 shown in tabular form in FIG. 2b. In the fifth transmission frame type all four slots indicated by the symbol 'dsb', carry synchronisation (Sync) information. Examples are frames 1 to 4 in FIG. 2(a). This frame type is typically used by the MS to start the call transmission, where the frame's structure facilitates synchronization for other MSs.

In summary, slot-3 in frames '6', '12' and '18' in each of the sequences 100, 200 and 250, may be considered as a means to provide information to DM-MSs, i.e. all DM MSs receive signalling information sent on this time slot to maintain up-to-date knowledge of the DMO channel state. In effect, due to the simplicity of DMO communications, the use of a dedicated slot-3 in this manner is somewhat equivalent to the use of a main control channel (MCCH) in a trunked communication system, where a dedicated channel is provided to relay such signalling information.

Furthermore, the signalling and physical information necessary for those DM-MSs that are participating in a DM call is sent in slot-1 of every frame '18'. Key physical attributes for a called DMO MS are Symbol Timing Recovery (STR) and Frequency Correction (FC). STR is a procedure by which the receiving (slave) MS adjusts its timing scheme/ timing reference to match the transmitting (Master) MS's timing scheme/ timing reference. Receiving, processing and possibly adapting a timing scheme/ timing reference and/or frequency reference, is performed at least once every multiframe (eighteen frames) according to the TETRA standard.

Within these transmission patterns the TETRA standard specifies a surveillance and sync. acquisition method. A surveillance pattern is a sequence of RF signal reception intervals (i.e. a periodicity of sampling the RF channel) where a radio unit attempts to determine the state of the RF channel. Notably, the TETRA standard specifies a surveillance and sync. acquisition method that is based upon detecting any generic radio communication emission, which may therefore include any random RF noise or interfering signal.

In order to determine a state of a TETRA RF channel, a TETRA radio samples the radio frequency (RF) channel once every 56.7/5 milliseconds (i.e. five times a frame, for approx. two milliseconds). By sampling the RF channel at this periodicity, the detection of any available radio energy, within a selected frequency range and between prescribed signal strength thresholds, is assured, in that a TETRA transmission burst from an operational TETRA radio unit will be sampled twice.

Upon detection of such emissions, the proposed and standardised method then dictates a transition of the detecting TETRA radio unit into a Sync. Acquisition mode of operation. Here, the TETRA radio unit's receiver is activated for up to six TETRA frames, in order to align the real time clock on Sync. burst boundaries. In this regard, the Sync. Acquisition procedure is a multi-step process to align the receiving MS's intrinsic time-frame boundaries to those of the active (transmitting) MS, when determined as being present on the RF channel.

Thus, in summary, the current surveillance and sync. acquisition method is:
(i) Energy wise wasteful, for most of the channel monitoring time, as it may perform synchronisation acquisition routines on radio emissions that were not related to a transmitting MS, i.e. most of the time the DMO channel is in an IDLE state where the MS is informed that is the case. In the algorithm described above, the radio activates its receiver five times every frame, i.e. samples the DM channel every '2' msec. and thereby wastes its battery for IDLE channel monitoring;
(ii) Wasteful of CPU cycles, for most of the channel surveillance time, for the same reasons as given above;
(iii) Provides a low sync. acquisition hit rate, as the receiving MS may equally synchronise to a normal TETRA traffic communication/frame, instead of a synchronisation burst;
(iv) The method does not work particularly well when TETRA Type 3 and Type-4 frames are received, i.e. when the DM MS switches from IDLE monitoring to Acquisition mode. That is, in order to determine the channel state, the DM MS shall receive and successfully decode a 'SYNC' frame. When the MS detects activity in the sampling mode it switches to an acquisition mode. If the detected activity is a frame Type-3 or Type-4 the MS receives the next 'SYNC' for decoding in six frames only, as shown in FIG. 1. That means the MS operates with a fully-activated receiver during five frames (i.e. five times 56.7 msec.) for no purpose.

Thus, there exists a need to provide a wireless communication unit, a wireless communication system and method of acquiring synchronisation wherein the aforementioned disadvantages may be alleviated.

WO-A-02/37714 describes a communication system in which mobile radios acquire synchronisation in a sleep mode by one radio sending a synchronisation signal at a given time. This reference does not disclose or suggest the invention now to be described.

### Statement of Invention

In accordance with a first aspect of the present invention there is provided a wireless communication unit. The wireless communication unit is capable of communication with a second communication unit on a communication system employing an unsynchronised timing structure. The wireless communication unit comprises a signal processor operably coupled to a timer, such that the signal processor is configured to detect a frame-type of a transmission from the second communication unit and adapt a timing parameter of the timer in response thereto, in order to acquire synchronisation. The signal processor is operable to detect a frame type by detecting a radio frequency double energy burst in a sample frame of the detected transmission.

In this manner, by detecting a frame type, where one frame includes plural bursts and each burst relates to one 'active' slot, a wireless communication unit is able to acquire synchronisation to another unit operating in an unsynchronised communication system with a higher degree of certainty and more rapidly. The processor may expend lower power consumption and processor bandwidth than in known techniques.

In accordance with a second aspect of the present invention there is provided a method of acquiring synchronisation between wireless communication units employing an asynchronous timing structure, as claimed in Claim 9 of the accompanying claims.

Further features of the present invention are as defined in the accompanying dependent claims and are as disclosed in the following description of embodiments of the invention.

Embodiments of the present invention will now be described by way of example with reference to the accompanying drawings, in which:

### Brief Description of the Drawings

FIG. 1 and FIG. 2 illustrate timing diagrams for known TETRA DMO channel frame types.
FIG. 3 illustrates a wireless communication unit adapted in accordance with preferred embodiments of the present invention;
FIG. 4, FIG. 5 and FIG. 6 illustrate timing diagrams of various signal sampling rates/instances, employed by a TETRA DMO communication unit in accordance with preferred embodiments of the present invention; and
FIG. 7, FIG. 8, FIG. 9 and FIG. 10 illustrate a series of flowcharts (sub-routines) of a mechanism to support synchronisation acquisition of a TETRA DMO communication unit according to the preferred embodiments of the present invention.

### Description of embodiments of the present invention

The inventive concepts of the present invention are illustrated with reference to a TETRA DMO communication system. In summary, a preferred embodiment of the present invention proposes an improved and more efficient mechanism to acquire synchronisation within the time constraints specified by the TETRA standard. Advantageously, the provision of a mechanism to identify a type of TETRA DMO frame in the RF detection process enables a radio unit (MS) operating in DMO to adapt its timing reference to more efficiently decode transmissions and improve its synchronisation process. Thus, such a DMO radio unit implementing the inventive concepts described herein is provided with the opportunity to acquire synchronisation at a much lower power consumption, much lower CPU (central processor unit) bandwidth and consequent saving of up to 80% in battery life.

Although a preferred embodiment of the present invention is described with reference to a wireless TETRA DMO subscriber unit, it is within the contemplation of the present invention that the inventive concepts can be applied equally to other wireless DMO (i.e. unsynchronised) communication units and other timing structures.

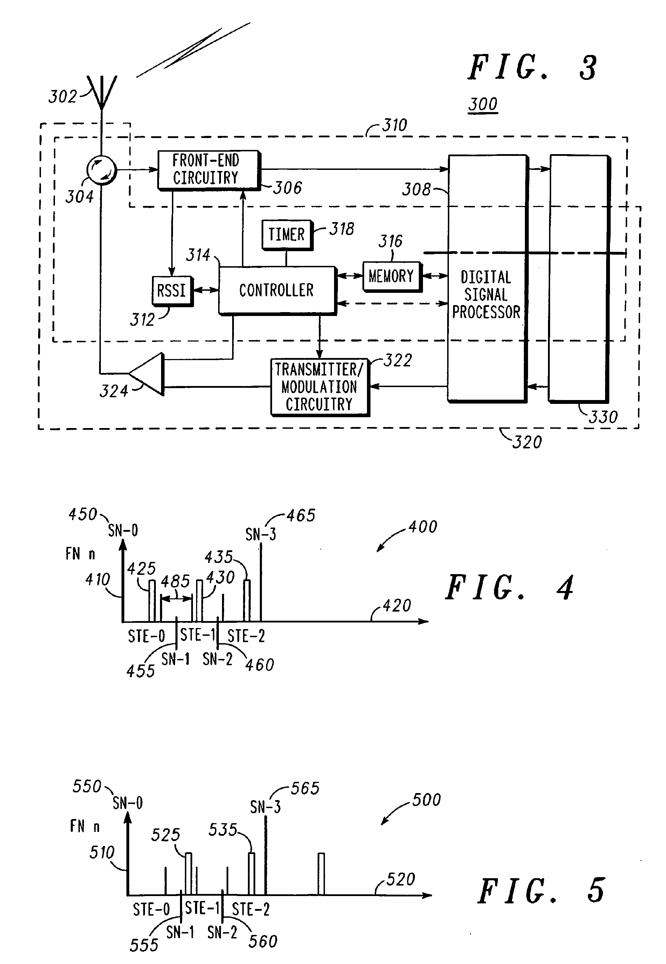

Referring now to FIG. 3, there is shown a block diagram of a wireless DMO TETRA MS or subscriber unit 300 adapted to support the inventive concepts of the preferred embodiments of the present invention. The wireless subscriber unit 300 includes an antenna 302 preferably coupled to a duplex filter or antenna switch 304 that provides isolation between a receiver chain 310 and a transmitter chain 320 within the wireless subscriber unit 300. As known in the art, the receiver chain 310 typically includes receiver front-end circuitry 306 (effectively providing reception, filtering and intermediate or base-band frequency conversion). The front-end circuit is serially coupled to a signal processing function (signal processor) 308. An output from the signal processing function 308 is provided to a user-interface 330, which may comprise a display, loudspeaker, etc.

The receiver chain 310 also includes received signal strength indicator (RSSI) circuitry 312 (shown coupled to the receiver front-end 306, although the RSSI circuitry 312 could be located elsewhere within the receiver chain 310). The RSSI circuitry is coupled to a controller 314 for maintaining overall subscriber unit control. The controller 314 is also coupled to the receiver front-end circuitry 306 and the signal processing function 308 (generally realised by a digital signal processor (DSP)). The controller 314 may therefore receive bit error rate (BER) or frame error rate (FER) data from decoded signals. The controller 314 is coupled to the memory device 316 for storing operating regimes, such as decoding/encoding functions and the like. A timer 318 is coupled to the controller 314 to control the timing of operations (transmission or reception of time-dependent signals) within the wireless subscriber unit 300.

As regards the transmit chain 320, this essentially includes a user-interface 330 comprising elements such as a microphone, keypad, etc. coupled in series to a transmitter/modulation circuit 322. Thereafter, any transmit signal is passed through a RF power amplifier 324 to be radiated from the antenna 302. The transmitter/modulation circuitry 322 and the power amplifier 324 are operationally responsive to the controller, with an output from the power amplifier 324 coupled to the duplex filter or antenna switch 304. The transmitter/modulation circuitry 322 and receiver front-end circuitry 306 comprise frequency up-conversion and frequency down-conversion functions (not shown).

In accordance with a preferred embodiment of the present invention, the signal processing function 308 has been adapted to adjust the timing of the timer 318 according to detected TETRA synchronisation bursts. The preferred embodiment of the present invention is aimed at achieving a higher sync. acquisition hit rate at a much lower consumption of power and other resources, such as CPU bandwidth.

The preferred embodiment of the present invention is formed principally around the signal processor function 308 abiding by the following rules:
(i) Relinquishing Type-2 frame hits certainty, to focus on identifying (increasing the hit rate of) Type-3 and Type-4 synchronisation frames to achieve rapid synchronisation;
(ii) Reducing a number of receiver activations to conserve power;
(iii) Smart noise elimination, i.e. reducing the occurrence of false detection; and
(iv) Channel learning/tracking process for hit probability forecast, as the process allows a DM MS not to activate its receiver for six frames continuously (i.e. in a synch acquisition mode), but to activate its receiver at the correct time in order to determine whether the activity on the channel is white noise or a call.

The proposed new method requires the activation of the receiver for merely three short intervals in each frame, of length of 1.1806 msecs in the TETRA standard timing structure, instead of the five intervals required by the current common method. Three samplings in a frame is the minimum that is required for catching Frame Type-3 and Frame Type-4. In this way one sampling is guaranteed to detect an 'active' slot. The fewer number of receiver activations, the more the power saving in both active communication modes as well as in the radio unit's power up and power down cycles. Thus, the proposed method is better inclined towards detecting a Sync. frame, such as Type-3 and Type-4, and far less towards detecting a normal traffic Type-2 transmission, which would not greatly assist in a synchronisation process.

Thus, in accordance with the preferred embodiment of the present invention, once energy is detected, the reception pattern that is employed is modified so as to try to determine/validate the received frame type. If a Type-3 frame or Type-4 frame is identified, then the processing function 308 is configured to skip all the following time-frames, up to the next expected sync. frame. Then the subscriber unit 300 activates its receiver, for a sufficiently short period (henceforth referred to as the test pattern frame), in order to align its real time clock to the actual sync burst boundaries. The alignment of a real-time clock to identified timing points or boundaries may be implemented by any known method.

The test patterns may be designed such that they can efficiently discard false detections, and synchronise the communication quickly. Whenever necessary, the activation of the receiver can be further reduced to further curtail power consumption. For example, in order to reduce power consumption it may be preferred that a DMO MS monitors the channel during one multiframe and does not activate the receiver during the next frame. In such a manner a further 50% saving in battery consumption can be achieved, which offers a trade-off of battery saving or fast call entering.

The various adapted components within the TETRA DMO MS subscriber unit 300 can be realised in discrete or integrated component form. More generally, the functionality associated with detecting a TETRA DMO communication type, may be implemented in a respective communication unit in any suitable manner. For example, new apparatus may be added to a conventional communication unit, or alternatively existing parts of a conventional communication unit may be adapted, for example by reprogramming one or more processors 308 therein. As such, the required adaptation may be implemented in the form of processor-implementable instructions stored on a storage medium, such as a floppy disk, hard disk, programmable read-only memory (PROM), random access memory (RAM) or any combination of these or other storage media.

Referring now to FIG. 4, FIG. 5 and FIG. 6, the pattern analysis employed in the preferred embodiments of the present invention is described in greater detail. Let us assume that the radio channel is in a 'RESERVATION' mode. That is, the master radio sends its signals (frame type-4) in frames '6', '12' and '18' only. All other frames are therefore empty.

Thus, in this context, FIG. 4 illustrates a timing diagram of an Initial Surveillance Sampling Pattern (ISSP) 400, which is designed to more efficiently capture such synchronization bursts, rather than normal bursts.

The timing diagram is shown with respect to signals 410 versus time 420. Each time frame (comprising four time slots 485 of the standard TETRA timing structure) is preferably divided into three equally long sampling time extents (STE), i.e. STE-0 425, STE-1 430 and STE-2 435.

In accordance with the preferred embodiment of the present invention, the processor of the wireless communication unit 300 starts to fully decode TETRA RF signals precisely 2.36116 msec after each STE boundary, where the STE period comprises, in effect, 1.33 TETRA time slots. Thereafter, the decoding operation on a particular burst is performed for exactly 1.1806 msec and then the decoding operation is stopped, or signals are no longer received.

In effect, the receiving slave radio is monitoring the channel and at some point catches a frame with signalling (for example frame 6). By employing a decoding operation that follows this pattern, the wireless communication unit pays minimal attention to a single burst's time-frame, but invariably detects an evenly distributed, double burst time-frame energy pattern, as shown in FIG. 4. Notably, a decoding operation employed to cover STE-0 425 and STE-1 430 (from SN-0 450 to SN-2 460) or employed to cover STE-1 430 and STE-2 435 (from SN-1 455 to SN-3 465) will encapsulate the periodic Type-3 or Type-4 TETRA signals.

Referring now to FIG. 5, a modified test frame pattern 500 is illustrated that is employed by the wireless communication unit 300 upon detecting any sufficiently intense RF energy (with the pattern in FIG. 4). The processor produces a tailored test-frame pattern (TFP) 500, which consists of three STEs, namely: STE-0 525, STE-1 530 and STE-2 535. Notably, the 'middle' STE's centre (STE-1 530) is arranged to be exactly a single time-frame duration away from the energy detecting ISSP's STE's centre, and as a consequence the other two STEs lie two time slots durations away from it. In this manner, the wireless communication unit is able to detect RF energy in a regular pattern of a two-timeslot difference.

Thus, the processor (processing function 308) will then identify that two samples occur in a frame in frame '12'. The two samples are positioned roughly two time slots away from each other, i.e. in two consecutive STE periods, the processor assumes that two bursts of a Type-3 or Type-4 Frame have been found.

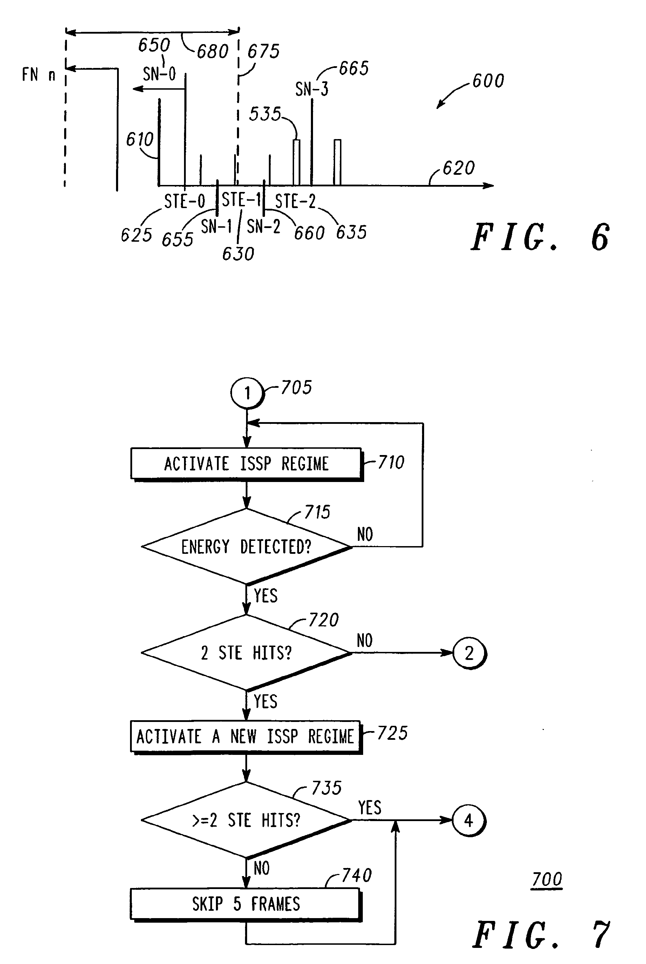

The processor then initiates a Sync. Acquisition procedure, and generates a Sync. Acquisition Frame Pattern (SAFP) to identify frame '18', as illustrated in the timing diagram 600 of FIG. 6. Again, the processor produces a SAFP 600 consisting of three STEs: STE-0 625, STE-1 630 and STE-2 635.

Notably, the sampling pattern is arranged to be anchored around the mid-point 665 between the two energy reporting TFP samplings 660 and 695, where a reception interval of a frame 680 of 14.167 msec. is preferably generated on each side of each the mid-point 665.

By manipulating the sampling periods in such a manner, it is possible to identify periodic transmissions in particular slots with minimised processing time and at the same time reduce the risk of detecting spurious noise and random messages and interpreting these as worthy of decoding.

Thus, in this manner, a full 56.67 msec. TETRA timing structure is generated, to enable subsequently received TETRA signals to be accurately received and decoded. In this manner, the preferred embodiment of the present invention provides a significant improvement in battery saving.

To quantify the improvement provided by the aforementioned inventive concepts employed in the preferred embodiment, let us first consider the simplest known algorithm of the synch. acquisition process, which is to activate the receiver continuously for the duration of a whole frame, i.e. for 56.7 msec). Thus, by activating the receiver continuously, it is possible to achieve the quickest and the most stable synchronization. However, such an approach is very wasteful of processing resource.

The known technique to provide an algorithm that samples five times in a frame offers some battery saving. Thus, as one sampling period takes about 2 msec., the receiving radio activates its receiver for only 10 msec in a 56.7 msec. frame. Most of the time a DMO radio is in an IDLE mode of operation, so it is possible to obtain a battery saving of about 5.5 times compared to the first example.

If the above methodology is extended to sampling only once in a frame, it would allow a receiving radio to save even more energy. However, if one takes into account the possible effect of white noise, the receiving radio may well operate all the time in a sync. acquisition mode, which is very wasteful of processing resource.

By recognising and appreciating the aforementioned effects, the inventors of the present invention have proposed an algorithm that requires at least two 'hits' in order to switch to a sync. acquisition mode of operation. By employing a 'two-hit' approach, a receiving radio is able, in most cases, to distinguish an arbitrary peak of energy (white noise) from a 'sync pattern'.

In particular, the proposed algorithm is not based on identifying two-hits in the pre-defined slot pattern, but relating to the TETRA DMO frame structure patterns/frame types. For example, a receiving radio activates its receiver three times per frame instead of five times per frame, thereby providing a 40% battery saving in an IDLE mode of operation.

Referring now to FIG. 7, FIG. 8, FIG. 9 and FIG. 10, a flowchart (for example as shown in four sub-routine formats) illustrates the overall surveillance and sync. acquisition procedure according to a preferred embodiment of the present invention. The process 700 commences in FIG. 7 in step 705, with an ISSP pattern activated, as shown in step 710. If energy is detected in step 715, for example as per FIG. 4 above, a determination is made as to whether two STE hits are detected in the sampling window, as shown in step 720. Two STE hits would signify two energy bursts, for example a TETRA synchronisation burst in both slot-1 and slot-3 of the 6^{th}, 12^{th} or 18^{th} frame when a Type-4 Frame. If no energy is detected in step 715, the process loops until energy is detected.

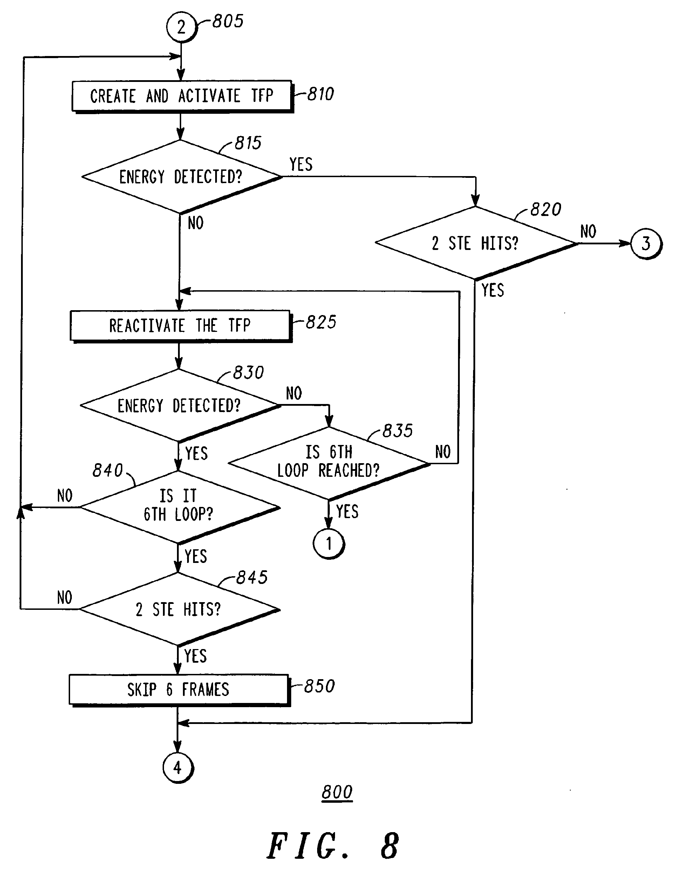

If two STE hits are not detected in the sampling window, in step 720, the process moves onto the flowchart 800 of FIG. 8. If two STE hits are detected in the sampling window, in step 720, the same ISSP process is run again, as shown in step 725 and preferably in accordance with the pattern illustrated in FIG. 5.

Thus, in summary, when the master MS starts a call it sends between two and four continuous (TYPE-5) frame transmissions. It makes sense to check if the MS encounters the call initiation and not to wait for six frames for the next TYPE-4 or TYPE-3 frame. Therefore, the MS performs the ISSP for a second time in the next adjacent frame. When the DM MS identifies two to three hits, it directly switches to ASAFP, which speeds up call entry.

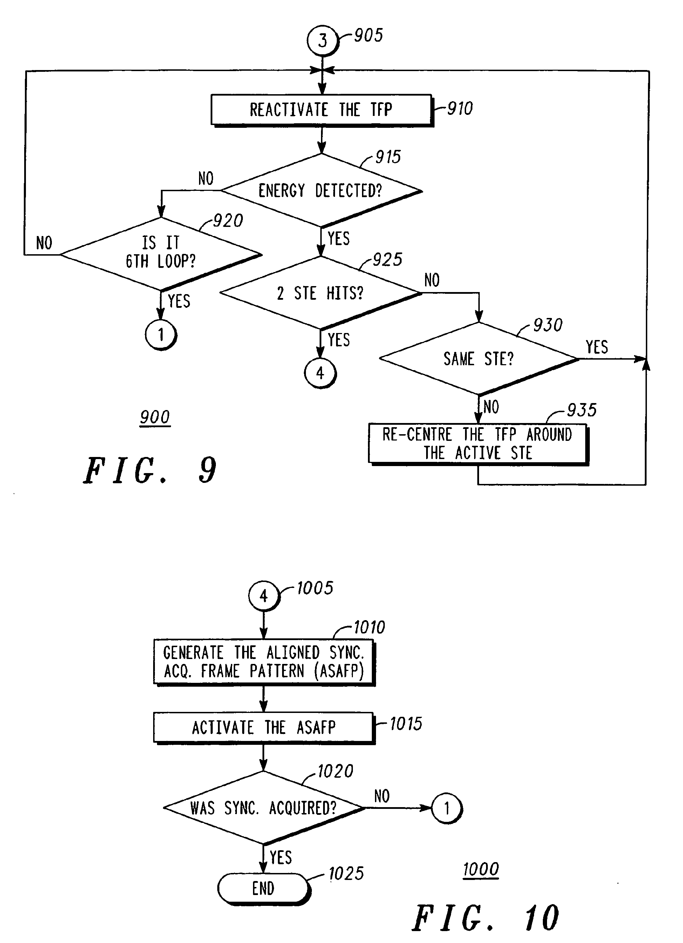

The new ISSP process determines whether there are at least two STE hits in a subsequent time-frame, as shown in step 735. If there are not three STE hits in a subsequent time-frame in step 730, a determination is made as to whether there are at least two STE hits in a subsequent time-frame, as shown in step 735. If there are at least two STE hits in a subsequent time-frame in step 735, the process moves to a sync. acquisition sub-routine as shown in FIG. 10. If there are not two STE hits in a subsequent time-frame in step 735, the process skips, say, five frames and then moves to a sync. acquisition process of FIG. 10.

There is always a possiblity that a MS will enter the synch acquisition due to white noise or 'false' alarms/random signals. However, according to the algorithm of a preferred embodiment, the MS performs ASAFP during one frame only, and not during seven frames as in the known 'five samples per frame' algorithm.

Preferably, five frames are skipped as, if in the first time two hits have been identified, the chance that it was a frame Type-3 or frame Type-4 is rather high. The next frame that may contain useful information, i.e. a frame Type-3 or Type-4, occurs only six frames later, according to the standard. Since the MS activates ISSP twice, it preferably skips five frames exactly in case of one or zero hits to capture a frame Type-3 or frame Type-4.

Referring now to the flowchart 800 of FIG. 8, for example following two STE hits not being detected in the sampling window in step 720 of FIG. 7, the process moves onto the creation and activation of a test-frame pattern in step 810. If energy is detected in the use of the test frame pattern in step 815, a determination is made as to whether the energy comprises two STE hits or not. If two STE hits are found, the process moves on to the sync. acquisition sub-routine of FIG. 10. If two STE hits are not found, i.e. it is identified that the frame being detected is likely not to be a synchronisation frame, the process moves on to the sub-routine of FIG. 9.

If energy is not detected in step 815, the TFP is re-activated in step 825. A further determination is then made as to whether energy is detected using the re-activated TFP in step 830. If energy is again not detected in step 830, the process loops. A determination is made as to whether, say, the 6^{th} loop has been reached in step 835, following the TFP being continuously re-activated in step 825. In this manner, the process loops a sufficient number of times to ensure the energy detection operation covers a synchronisation frame of Type-3 or Type-4 encompassing two synchronisation bursts. Clearly, a skilled artisan will appreciate that other implementations would require a different number of loops to accommodate the frequency of synchronisation bursts in other wireless communication systems.

Once the process has looped six times, the process returns to the start step 705 in FIG. 7. If energy is detected this time in step 830, when it had not been detected in step 815, the process loops back to step 810 in that a TFP is created and activated. If looping around the above steps six times fails to detect energy following initial activation of the TFP in step 810, but always detects energy on the re-activation of the TFP in step 825, the process determines whether 2 STE hits are detected in step 845.

If two STE hits are not detected in step 845, i.e. the energy does not relate to a TETRA Type-3 or TETRA Type-4 frame, the process starts the loop from step 810 through step 840 again. If two STE hits are detected in step 845, the process skips, say, six frames in step 850 and then moves on to the sync. acquisition sub-routine in FIG. 10.

Referring now to the flowchart 900 of FIG. 9, for example following two STE hits not being detected in the decoding window in step 820 of FIG. 8, the process moves onto the re-activation of a test-frame pattern in step 910. If energy is not detected following the use of the re-activated test-frame pattern in step 915, the process loops back to step 910 with the TFP being re-activated. If this loop is followed six times, from step 920, the process returns to the start step 705 of FIG. 7.
However, if energy is detected in step 915, a determination is made as to whether two STE hits are found in step 925.

If two STE hits are found in step 925, indicating that a TETRA type-3 or TETRA type-4 frame is found, the process moves to the sync. acquisition sub-routine in FIG. 10.
If two STE hits are not found in step 925, a determination is made as to whether it is the same STE as a previous STE in step 930. For instance, such a situation may occur when the MS starts performing a TFP pattern after a 'false' alarm and the call has a different timing pattern. If it is not the same STE, the timing of the TFP is adjusted around the active STE in step 935, and the process loops back to step 910 in re-activating the TFP around this new centre. If the timing is not correct in step 930, i.e. the same STE is identified as previously, the process loops back to step 910 in re-activating the TFP.

Referring now to FIG. 10, the sync. acquisition sub-routine 1000 is illustrated in accordance with the preferred embodiment of the present invention. The sync. acquisition process starts in step 1005 and an aligned sync. acquisition frame pattern (ASAFP) is generated in step 1010. The ASAFP is then activated in step 1015 and a determination is made as to whether synchronisation is acquired in step 1020. If synchronisation is not acquired, in step 1020, the process returns to the start step 705 of FIG. 7. If synchronisation is acquired, in step 1020, the wireless communication unit continues its communication and the sync. acquisition process stops in step 1025. In this manner, a synchronisation acquisition process is implemented by determining whether a TETRA synchronisation frame is detected, as compared to a generic determination that RF energy is detected or detecting a normal traffic frame, which could result in a slow or false acquisition.

The inventors of the present invention have demonstrated the improvement that can be obtained in synchronisation acquisition resulting from implementing the inventive concepts described above. A performance assessment has been made for a typical activity distribution profile with two distinct scenarios: a quiet environment and a noisy environment, with the results given in Table 1 and Table 2 below. All profiling data is denoted in terms of accumulative RF reception interval ratio, versus current surveillance practices. The tables indicate that the proposed method is far superior to the existing practices in every category, as well as in the overall, weighted sub-category, in terms of power saving.

**Table 1: Quiet Environment**

| | % | energy ratio |
|---|---|---|
| Single false frame sampling ratio | 7 | 3/5 |
| Double false frame sampling ratio | 3 | :>1/7 |
| Successful sync acquisition | 10 | :>1/7 |
| Free channel surveillance | 80 | 3/5 |

| | | |
|---|---|---|
| Total weighted value is: (3/5)*0.8 + (1/7)*0.1 + (1/7)*0.03 + (3/5)*0.07 = ~0.588 | | |

**Table 2: Noisy Environment**

| | % | energy ratio |
|---|---|---|
| Single false frame sampling ratio | 20 | 3/5 |
| Double false frame sampling ratio | 10 | :>1/7 |
| Successful sync acquisition | 10 | :>1/7 |
| Free channel surveillance | 60 | 3/5 |

| | | |
|---|---|---|
| Total weighted value is: (3/5)*0.6 + (1/7)*0.1 + (1/7)*0.1 + (3/5)*0.2 = ~0.508. | | |

The distribution of weighted patterns is based on common accumulative statistics.

It is within the contemplation of the present invention that the inventive concepts described herein can be applied in other unsynchronised communication systems, where an improvement in sync. acquisition can be gained by the wireless communication unit by detecting any frame type, as compared to a generic RF emission. However, a preferred embodiment focuses on the detection of a synchronisation burst to speed up the sync. acquisition process.

Furthermore, the processor embodying the invention preferably employs in operation a sampling structure dissimilar to a timing of transmissions between the wireless communication unit and the second communication unit, e.g. the processor detects frame transmissions in a four slot frame by employing three sampling periods. The processor preferably detects informative/synch frames by employing the minimum number of samplings. In the particular case of employing the inventive concepts in a TETRA system, the minimum number of samplings is three.

It will be understood that the wireless communication unit and method of performing synchronisation acquisition therein, as described above, provide at least one or more of the following advantages:
(i) Sync. acquisition is performed within the time constraints specified by the TETRA standard.
(ii) Sync. acquisition is performed at a much lower power consumption;
(iii) Sync. acquisition is performed using a much lower CPU bandwidth; and
(iv) Up to 80% sync. acquisition saving of battery life is achieved.

Whilst specific, and preferred, implementations of the present invention are described above, it is clear that one skilled in the art could readily apply variations and modifications of such inventive concepts.

Thus, in summary, a preferred embodiment of the present invention proposes a mechanism to achieve sync. acquisition by detecting a synchronisation transmission and modifying a sync. acquisition process in response thereto. Thus, a preferred embodiment of the present invention has provided a wireless communication unit and a method of performing synchronisation acquisition that substantially alleviates the aforementioned problems with prior art arrangements.

## Claims

1. A wireless communication unit (300) capable of communication with a second wireless communication unit in a communication system that employs an unsynchronised timing structure, wherein the wireless communication unit includes a signal processor (308) operably coupled to a timer (318), such that the signal processor is operable to sample frames of a transmission from the second communication unit in order to adapt a timing parameter of the timer in response to an expected synchronisation burst included in the sampled frames in order to acquire synchronisation, **characterised in that** the signal processor is operable to detect a frame of the detected transmission in which there are two slots each having an RF energy burst, and, in response, in a subsequent frame expected to include a synchronisation burst, to adapt the timing parameter to the expected synchronisation burst.

2. A wireless communication unit according to claim 1 which is operable to detect whether the next frame adjacent to the detected frame includes at least two slots each having an RF energy burst and, if it does, to acquire synchronisation using an expected synchronisation burst of that next frame and, if it does not, to skip processing in several frames until there is a subsequent frame including the expected synchronisation burst.

3. A wireless communication unit according to claim 1 or claim 2, wherein the signal processor is operable to employ a frame sampling structure in which only three samples per frame are taken and the signal processor is operable to detect whether a burst of received RF energy is present in each sample taken.

4. A wireless communication unit according to claim 3 wherein the signal processor is operable to modify the sampling structure by dividing a sample frame into three sample periods in each of which a sample is taken and by setting a centre of a middle one of the sample periods of the frame to be one frame after detected RF energy.

5. A wireless communication unit according to claim 4 wherein the signal processor is operable upon detecting RF energy in two consecutive samples to apply a synchronisation acquisition procedure in which a reception period equal to a quarter frame is applied on each side of a mid-point between the consecutive samples.

6. A wireless communication unit according to claim 5 wherein the signal processor is operable to generate an aligned synchronisation frame pattern to determine whether synchronisation is acquired.

7. A wireless communication unit according to any one preceding claim, wherein the wireless communication unit is capable of communicating in a direct mode of operation in accordance with the TETRA standard and the signal processor is operable to detect a TETRA Type-3 or Type-4 frame and to adapt the timing parameter to the expected synchronisation burst of a subsequent TETRA Type-3 or Type-4 frame.

8. A wireless communication unit according to any one of the preceding claims which is a mobile station.

9. A method (700, 800, 900, 1000) of acquiring synchronisation between wireless communication units employing an unsynchronised timing structure comprising the steps of:
a signal processor of a first wireless communication unit (300) sampling frames of a transmission from a second communication unit in order to adapt a timing parameter of a timer of the first communication unit in response to an expected synchronisation burst included in the sampled frames in order to acquire synchronisation, **characterised by** the signal processor (308) detecting (715, 720)) a frame of the sampled transmission in which there are two slots each having an RF energy burst, and, in response, in a subsequent frame expected to include a synchronisation burst, adapting (1010) the timing parameter to the expected synchronisation burst.

10. A method according to claim 9 which includes the processor detecting whether the next frame adjacent to the detected frame includes at least two slots each having an RF energy burst and, if it does, acquiring synchronisation using an expected synchronisation burst of that next frame and, if it does not, skipping processing in several frames until there is a subsequent frame including the expected synchronisation burst.

11. A method according to claim 9 or claim 10, wherein the signal processor employs a frame sampling structure in which only three samples per frame are taken and the signal processor detects whether received RF energy is present in each sample taken.

12. A method according to any one of claims 9 to 11 including the signal processor modifying the sampling structure to determine a received frame type in response to a detection of a burst of radio frequency energy.

13. A wireless communication unit according to claim 12 wherein the signal processor modifies the sampling structure by dividing a sample frame into three sample periods in each of which a sample is taken and sets a centre of a middle one of the sample periods of the frame to be one frame after the detected burst of RF energy.

14. A method according to claim 12 or claim 13 wherein upon detecting RF energy in two consecutive samples the signal processor applies a synchronisation acquisition procedure in which a reception period equal to a quarter frame is applied on each side of a mid-point between the consecutive samples.

15. A method according to claim 14 wherein an aligned synchronisation frame pattern is generated to determine whether synchronisation is acquired.

16. A method according to any one of claims 9 to 15, wherein the wireless communication unit operates in a direct mode of operation in accordance with the TETRA standard and the signal processor detects a TETRA Type-3 or Type-4 frame and adapts the timing parameter to the expected synchronisation burst of a subsequent TETRA Type-3 or Type-4 frame.

## Patentansprüche

1. Drahtloskommunikationseinheit (300), die imstande ist, mit einer zweiten Drahtloskommunikationseinheit in einem Kommunikationssystem zu kommunizieren, welches eine nicht-synchronisierte Terminierungsstruktur verwendet, wobei die Drahtloskommunikationseinheit einen Signalprozessor (308) aufweist, der funktionsfähig an einen Zeitgeber (318) gekoppelt ist, so dass der Signalprozessor derart betreibbar ist, dass er Rahmen einer Sendung von der zweiten Kommunikationseinheit beprobt, um einen Terminierungsparameter des Zeitgebers als Reaktion auf einen in den beprobten Rahmen enthaltenen erwarteten Synchronisierungsburst anzupassen, um eine Synchronisierung zu erlangen, **dadurch gekennzeichnet, dass** der Signalprozessor derart betreibbar ist, dass er einen Rahmen der detektierten Sendung detektiert, in welchem zwei Schlitze vorhanden sind, die jeweils einen RF-Energieburst haben, und er als Reaktion darauf in einem nachfolgenden Rahmen, der erwartungsgemäß einen Synchronisierungsburst aufweist, den Terminierungsparameter an den erwarteten Synchronisierungsburst anpasst.

2. Drahtloskommunikationseinheit nach Anspruch 1, die derart betreibbar ist, dass sie detektiert, ob der neben dem detektierten Rahmen gelegene nächste Rahmen wenigstens zwei Schlitze aufweist, die jeweils einen RF-Energieburst aufweisen, und in diesem Fall eine Synchronisierung unter Verwendung eines erwarteten Synchronisierungsbursts jenes nächsten Rahmens erlangt und andernfalls die Verarbeitung in mehreren Rahmen überspringt, bis ein nachfolgender Rahmen mit dem erwarteten Synchronisierungsburst auftritt.

3. Drahtloskommunikationseinheit nach Anspruch 1 oder Anspruch 2, wobei der Signalprozessor derart betreibbar ist, dass er eine Rahmenbeprobungsstruktur verwendet, in welcher nur drei Proben pro Rahmen genommen werden und der Signalprozessor derart betreibbar ist, dass er detektiert, ob ein Burst empfangener RF-Energie in jeder genommenen Probe vorhanden ist.

4. Drahtloskommunikationseinheit nach Anspruch 3, wobei der Signalprozessor derart betreibbar ist, dass er die Beprobungsstruktur verändert, indem er einen Proberahmen in drei Probedauern teilt, in denen jeweils eine Probe genommen wird, und indem er einen Mittelpunkt einer mittleren der Probedauern des Rahmens auf einen Rahmen nach der detektierten RF-Energie einstellt.

5. Drahtloskommunikationseinheit nach Anspruch 4, wobei der Signalprozessor derart betreibbar ist, dass er nach dem Detektieren von RF-Energie in zwei aufeinanderfolgenden Proben eine Synchronisierungserlangungsprozedur anwendet, in welcher eine Empfangsdauer gleich einem Viertelrahmen auf jeder Seite eines Mittelpunktes zwischen den aufeinanderfolgenden Proben angewandt wird.

6. Drahtloskommunikationseinheit nach Anspruch 5, wobei der Signalprozessor derart betreibbar ist, dass er ein angeglichenes Synchronisierungsrahmenmuster erzeugt, um zu bestimmen, ob eine Synchronisierung erreicht ist.

7. Drahtloskommunikationseinheit nach einem der vorangehenden Ansprüche, wobei die Drahtloskommunikationseinheit imstande ist, in einem direkten Betriebsmoduls in Übereinstimmung mit der TETRA-Norm zu kommunizieren, und wobei der Signalprozessor derart betreibbar ist, dass er einen TETRA-Typ-3- oder Typ-4-Rahmen detektiert und den Terminierungsparameter an den erwarteten Synchronisierungsburst eines nachfolgenden TETRA-Typ-3- oder Typ-4-Rahmens anpasst.

8. Drahtloskommunikationseinheit nach einem der vorangehenden Ansprüche, die eine Mobilstation ist.

9. Verfahren (700, 800, 900, 1000) zum Erlangen einer Synchronisierung zwischen Drahtloskommunikationseinheiten, die eine nicht-synchronisierte Terminierungsstruktur verwenden, mit den nachfolgenden Schritten:
ein Signalprozessor einer ersten Drahtloskommunikationseinheit (300) beprobt Rahmen einer von einer zweiten Kommunikationseinheit ausgehenden Sendung, um einen Terminierungsparameter eines Zeitgebers der ersten Kommunikationseinheit als Reaktion auf einen erwarteten Synchronisierungsburst in den beprobten Rahmen anzupassen, um eine Synchronisierung zu erlangen, **dadurch gekennzeichnet, dass** der Signalprozessor (308) einen Rahmen der beprobten Sendung detektiert (715, 720), in welchem zwei Schlitze vorhanden sind, die jeweils einen RF-Energieburst aufweisen, und als Reaktion darauf in einem nachfolgenden Rahmen, der erwartungsgemäß einen Synchronisierungsburst aufweist, den Terminierungsparameter an den erwarteten Synchronisierungsburst anpasst (1010).

10. Verfahren nach Anspruch 9, wobei der Prozessor detektiert, ob der neben dem detektierten Rahmen gelegene nächste Rahmen wenigstens zwei Schlitze aufweist, die jeweils einen RF-Energieburst aufweisen, und in diesem Fall eine Synchronisierung unter Verwendung eines erwarteten Synchronisierungsbursts jenes nächsten Rahmens erlangt und andernfalls die Verarbeitung in mehreren Rahmen überspringt, bis ein nachfolgender Rahmen mit dem erwarteten Synchronisierungsburst auftritt.

11. Verfahren nach Anspruch 9 oder Anspruch 10, wobei der Signalprozessor eine Rahmenbeprobungsstruktur verwendet, in welcher nur drei Proben pro Rahmen genommen werden und der Signalprozessor detektiert, ob ein Burst empfangener RF-Energie in jeder genommenen Probe vorhanden ist.

12. Verfahren nach einem der Ansprüche 9 bis 11, wobei der Signalprozessor als Reaktion auf ein Detektieren eines Radiofrequenzenergiebursts die Beprobungsstruktur verändert, um einen Typus eines empfangenen Rahmens zu bestimmen.

13. Verfahren nach Anspruch 12, wobei der Signalprozessor die Beprobungsstruktur verändert, indem er einen Proberahmen in drei Probedauern teilt, in denen jeweils eine Probe genommen wird, und wobei er einen Mittelpunkt einer mittleren der Probedauern des Rahmens auf einen Rahmen nach dem detektierten RF-Energieburst einstellt.

14. Verfahren nach Anspruch 12 oder 13, wobei der Signalprozessor nach dem Detektieren von RF-Energie in zwei aufeinanderfolgenden Proben eine Synchronisierungserlangungsprozedur anwendet, in welcher eine Empfangsdauer gleich einem Viertelrahmen auf jeder Seite eines Mittelpunktes zwischen den aufeinanderfolgenden Proben angewandt wird.

15. Verfahren nach Anspruch 14, wobei ein angeglichenes Synchronisierungsrahmenmuster erzeugt wird, um zu bestimmen, ob eine Synchronisierung erreicht ist.

16. Verfahren nach einem der vorangehenden Ansprüche, wobei die Drahtloskommunikationseinheit in einem direkten Betriebsmoduls in Übereinstimmung mit der TETRA-Norm arbeitet und wobei der Signalprozessor einen TETRA-Typ-3-oder Typ-4-Rahmen detektiert und den Terminierungsparameter an den erwarteten Synchronisierungsburst eines nachfolgenden TETRA-Typ-3- oder Typ-4-Rahmens anpasst.

## Revendications

1. Unité de communication sans fil (300) capable de communiquer avec une deuxième unité de communication sans fil dans un système de communication qui utilise une structure temporelle non synchronisée, l'unité de communication sans fil comprenant un processeur de signal (308) fonctionnellement couplé à un générateur de base de temps (318), de façon que le processeur de signal soit apte à échantillonner des trames d'une transmission provenant de la deuxième unité de communication afin d'adapter un paramètre de base de temps du générateur de base de temps en réponse à une salve de synchronisation attendue comprise dans les trames échantillonnées, afin d'acquérir une synchronisation, **caractérisée en ce que** le processeur de signal est apte à détecter une trame de la transmission détectée dans laquelle il y a deux créneaux temporels ayant chacun une salve d'énergie RF, et, en réponse, dans une trame ultérieure dont on s'attend à ce qu'elle comprenne une salve de synchronisation, à adapter le paramètre de base de temps à la salve de synchronisation attendue.

2. Unité de communication sans fil selon la revendication 1, qui est apte à détecter si la trame suivante adjacente à la trame détectée comprend au moins deux créneaux temporels ayant chacun une salve d'énergie RF et, si tel est le cas, à acquérir une synchronisation à l'aide d'une salve de synchronisation attendue de cette trame suivante et, dans le cas contraire, à sauter le traitement sur plusieurs trames jusqu'à ce qu'il y ait une trame ultérieure comprenant la salve de synchronisation attendue.

3. Unité de communication sans fil selon la revendication 1 ou la revendication 2, dans laquelle le processeur de signal est apte à utiliser une structure d'échantillonnage de trame dans laquelle sont prélevés seulement trois échantillons par trame, et le processeur de signal est apte à détecter si une salve d'énergie RF reçue est présente dans chaque échantillon prélevé.

4. Unité de communication sans fil selon la revendication 3, dans laquelle le processeur de signal est apte à modifier la structure d'échantillonnage en divisant une trame d'échantillonnage en trois périodes d'échantillonnage dans chacune desquelles est prélevé un échantillon et en définissant un centre d'une période centrale des périodes d'échantillonnage de la trame comme se trouvant une trame après la détection de l'énergie RF.

5. Unité de communication sans fil selon la revendication 4, dans laquelle le processeur de signal est apte, lors de la détection d'une énergie RF dans deux échantillons consécutifs, à appliquer une procédure d'acquisition de synchronisation dans laquelle une période de réception égale à un quart de trame est appliquée de chaque côté d'un point médian entre les échantillons consécutifs.

6. Unité de communication sans fil selon la revendication 5, dans laquelle le processeur de signal est apte à générer un motif de trame de synchronisation aligné pour déterminer si une synchronisation est acquise.

7. Unité de communication sans fil selon l'une quelconque des revendications précédentes, laquelle unité de communication sans fil est capable de communiquer dans un mode de fonctionnement direct selon la norme TETRA, et le processeur de signal est apte à détecter une trame TETRA de Type 3 ou de Type 4 et à adapter le paramètre de base de temps à la salve de synchronisation attendue d'une trame TETRA de Type 3 ou de Type 4 ultérieure.

8. Unité de communication sans fil selon l'une quelconque des revendications précédentes, qui est une station mobile.

9. Procédé (700, 800, 900, 1000) d'acquisition de synchronisation entre des unités de communication sans fil utilisant une structure temporelle non synchronisée, comprenant les étapes selon lesquelles :
un processeur de signal d'une première unité de communication sans fil (300) échantillonne des trames d'une transmission provenant d'une deuxième unité de communication afin d'adapter un paramètre de base de temps d'un générateur de base de temps de la première unité de communication en réponse à une salve de synchronisation attendue comprise dans les trames échantillonnées afin d'acquérir une synchronisation, **caractérisé par le fait que** le processeur de signal (308) détecte (715, 720) une trame de la transmission échantillonnée dans laquelle il y a deux créneaux temporels ayant chacun une salve d'énergie RF, et, en réponse, dans une trame ultérieure dont on s'attend à ce qu'elle comprenne une salve de synchronisation, adapte (1010) le paramètre de base de temps à la salve de synchronisation attendue.

10. Procédé selon la revendication 9, qui comprend le fait que le processeur détecte si la trame suivante adjacente à la trame détectée comprend au moins deux créneaux temporels ayant chacun une salve d'énergie RF et, si tel est le cas, acquière une synchronisation à l'aide d'une salve de synchronisation attendue de cette trame suivante et, dans le cas contraire, saute le traitement sur plusieurs trames jusqu'à ce qu'il y ait une trame ultérieure comprenant la salve de synchronisation attendue.

11. Procédé selon la revendication 9 ou la revendication 10, dans lequel le processeur de signal utilise une structure d'échantillonnage de trame dans laquelle sont prélevés seulement trois échantillons par trame, et le processeur de signal détecte si une énergie RF reçue est présente dans chaque échantillon prélevé.

12. Procédé selon l'une quelconque des revendications 9 à 11, comprenant le fait que le processeur de signal modifie la structure d'échantillonnage pour déterminer un type de trame reçu en réponse à une détection d'une salve d'énergie radiofréquence.

13. Unité de communication sans fil selon la revendication 12, dans laquelle le processeur de signal modifie la structure d'échantillonnage en divisant une trame d'échantillonnage en trois périodes d'échantillonnage dans chacune desquelles est prélevé un échantillon et définit un centre d'une période centrale des périodes d'échantillonnage de la trame comme se trouvant une trame après la détection de la salve d'énergie RF.

14. Procédé selon la revendication 12 ou la revendication 13, dans lequel, lors de la détection d'une énergie RF dans deux échantillons consécutifs, le processeur de signal applique une procédure d'acquisition de synchronisation dans laquelle une période de réception égale à un quart de trame est appliquée de chaque côté d'un point médian entre les échantillons consécutifs.

15. Procédé selon la revendication 14, dans lequel un motif de trame de synchronisation aligné est généré pour déterminer si une synchronisation est acquise.

16. Procédé selon l'une quelconque des revendications 9 à 15, dans lequel l'unité de communication sans fil fonctionne dans un mode de fonctionnement direct selon la norme TETRA, et le processeur de signal détecte une trame TETRA de Type 3 ou de Type 4 et adapte le paramètre de base de temps à la salve de synchronisation attendue d'une trame TETRA de Type 3 ou de Type 4 ultérieure.
